# EUROPEAN PATENT SPECIFICATION

(11) **EP 0 475 211 B1**
(45) Date of publication and mention of the grant of the patent: **10.04.1996**
(21) Application number: 91114572.0
(22) Date of filing: 29.08.1991
(51) Int. Cl.: G01N 21/31, G01N 30/74, G01J 3/427

(54) **Absorbance detector**
Absorptionsdetektor
Détecteur d'absorption

(30) Priority: 29.08.1990 JP 228646/90
(43) Date of publication of application: 18.03.1992
(73) Proprietor: SHIMADZU CORPORATION, Nakagyo-ku Kyoto-shi Kyoto 604 (JP)
(72) Inventor: Maruyama, Shuzo, c/o Shimadzu Corp., Sanjo-Factory, Nakagyo-ku, Kyoto-shi, Kyoto (JP)
(74) Representative: WILHELMS, KILIAN & PARTNER Patentanwälte

(56) References cited:
- DE-A- 2 817 333
- US-A- 4 824 242
- US-A- 4 832 484

## Description

### BACKGROUND OF THE INVENTION

The present invention relates to absorbance detectors of high-speed liquid chromatography and, more particularly, to an absorbance detector with a function to analyze qualitatively a peak purity of a chromatogram by scanning two wavelengths alternately to calculate a ratio of absorption constants measured by these two wavelengths.

An absorbance detector having a spectroscope with alternate scanning by two wavelengths is well known. An absorbance detector is disclosed in DE-A-2 817 333. This type of detector drives a spectroscope scan with two wavelengths λ₁ and λ₂ and measures absorption constants using each of these wavelengths. Given measured data Aλ₁ and Aλ₂, absorption constants are Aλ₁ (n-2), Aλ₂ (n-1), Aλ₁ (n), and the like; thus, the data are obtained alternately with respect to λ₁ and λ₂. Hence, chromatograph ratios are Aλ₁ (n-2)/ Aλ₂ (n-1), Aλ₁ (n)/ Aλ₂ (n+1), and so on. These calculated chromatography ratios uses absorption constants measured at different points of time by λ₁, and λ₂, one at a time. Therefore, these data are not simultaneous.

Another absorbance detector uses moving averages of absorption constants measured by wavelengths λ₁ and λ₂ ; a chromatography ratio is given by${\text{(Aλ}}_{\text{1}} {\text{(n-2) + Aλ}}_{\text{1}} {\text{(n) + ...) / Aλ}}_{\text{2}} \text{(n-1)} {\text{+ Aλ}}_{\text{2}} \text{(n+1) + ...)}$

A chromatography ratio is to be constant if the ratio is calculated for a single peak. However, a ratio calculated from absorption constants that are not simultaneous is not constant, and therefore, cannot measure peak purity correctly.

On the other hand, calculating a moving average needs filtering operation, resulting in the ratio of past data. This causes a time delay of data and is not preferable to a minute-to-minute measurement.

### OBJECTS AND SUMMARY OF THE INVENTION

Accordingly, it is an object of the invention to provide an absorbance detector that is able to obtain a correct peak purity by calculating a present or future absorption constant of each one of different wavelengths and that is applicable to the minute-to-minute measurement by eliminating time delay of the calculated data for a chromatography ratio.

### BRIEF DESCRIPTION OF THE DRAWINGS

Fig.1 is a block diagram to explain the invention.

Fig.2 is a graph to show time variations of absorption constants.

Fig.3 is a block diagram according to an embodiment of the invention.

### DETAILED DESCRIPTION OF THE PREFERRED EMBODIMENT

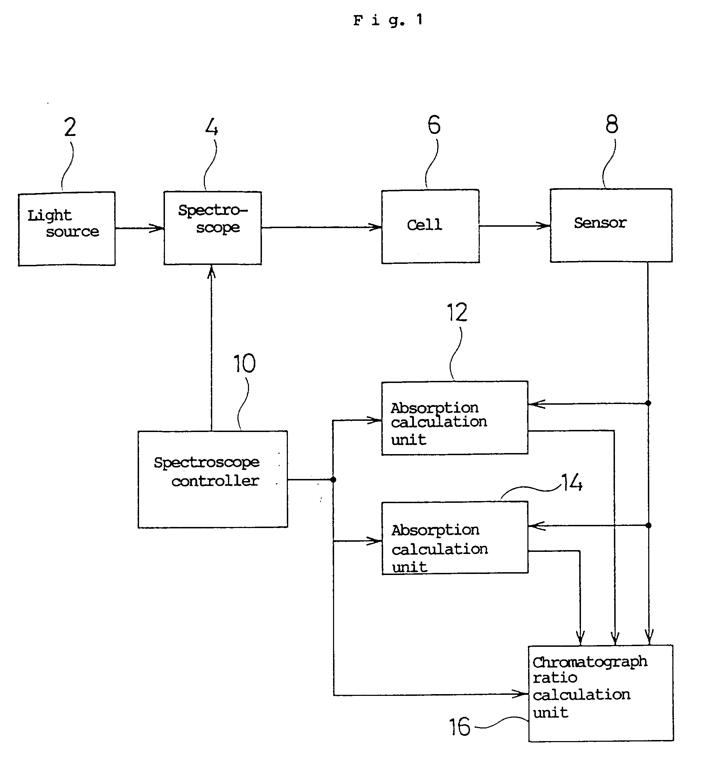

Referring to Fig. 1, numeral 2 is a light source, numeral 4 is a spectroscope to split the light from light source 2 and lead it to a cell 6, numeral 8 is a sensor to detect the light coming through cell 6, and numeral 10 is a spectroscope controller to make spectroscope 4 scan with two wavelength alternately. An absorption constant calculation unit 12, synchronizing scans of spectroscope 4, collects data of absorption constants measured at past several points with a wavelength λ₁ and utilize them to predict present or future measurement with wavelength λ₁. An absorption constant calculation unit 14, synchronizing scans of spectroscope 4, collects absorption data measured at past several points with a wavelength λ₂ and utilizes them to predict present or future measurement with wavelength λ₂. A chromatograph ratio calculation unit 16 calculates a ratio of simultaneous absorption constants obtained from absorption constant calculation unit 12 and 14.

According to another embodiment of the invention, absorption constant calculation unit 12, synchronizing scans of a spectroscope 4, collects data of absorption constants measured at past several points with a wavelength λ₁ and utilize them to predict an absorption constant at the time when the other absorption constant is measured by wavelength λ₂. Absorption constant calculation unit 14, synchronizing scans of a spectroscope 4, collects data of absorption constants measured at past several points with a wavelength λ₂ and utilize them to predict an absorption constant at the time when the other absorption constant is measured by wavelength λ₁. Chromatograph ratio calculation unit 16, then, calculates a ratio of absorption constant measured by wavelength λ₁ (λ₂) at a certain point of time and absorption constant predicted by absorption constant calculation unit 14(12) for wavelength λ₂ (λ₁) at that same point of time.

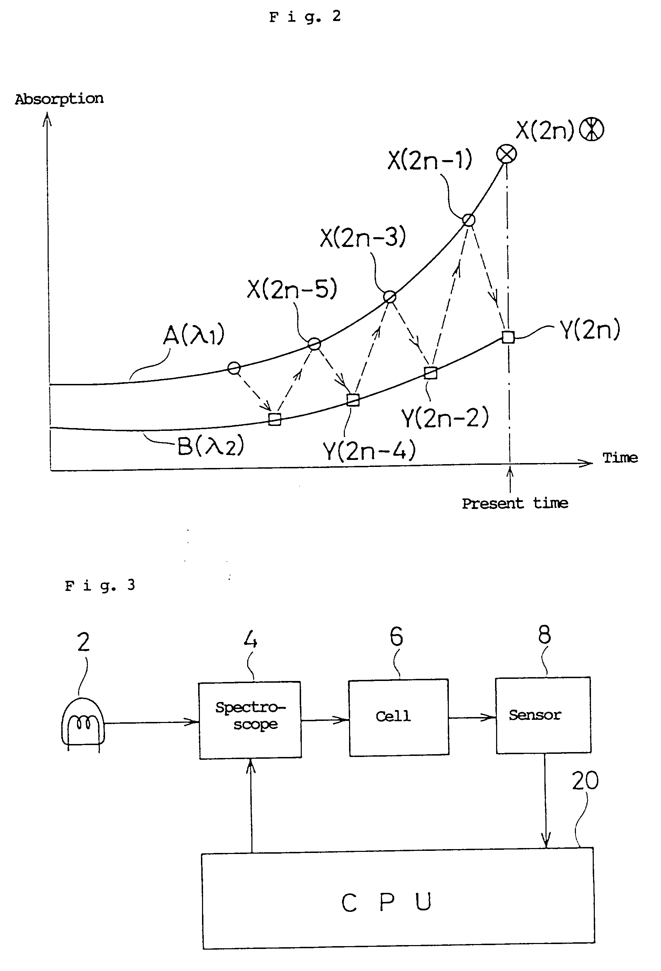

Fig.2 shows variations of absorption constants with time. A curve A represents absorption constants measured by wavelength λ₁ and a curve B represents absorption constants measured by wavelength λ₂.

Spectroscope 4 scans cell 6 with wavelength λ₁ and wavelength λ₂ alternately. If absorption constant measured by λ₁ is denoted by X and absorption constant measured by λ₂ is denoted by Y, then, because of alternate scanning with an equal interval by spectroscope 4, sensor 8 detects absorption constants as X(2n-5), Y(2n-4), X(2n-3), Y(2n-2), and so on. Being detected with the equal interval for each wavelength, absorption constant for a wavelength can be predicted as a linear function of data obtained by past several measurements with that wavelength.

According to the invention of claim 1, chromatograph ratio is obtained using the predicted value of each wavelength at the same point of time.

According to the invention of claim 2, when a measurement is performed with wavelength λ₁, absorption constant for λ₁, is a measured value at that point of time, which is denoted by Aλ₁ , while absorption constant for λ₂ is a value predicted from past several measurements with λ₂ for that same point of time, which is denoted by Aλ₂*. Then, chromatograph ratio is given by Aλ₁/ Aλ₂*. Similarly, when a measurement is performed by wavelength 2, chromatograph ratio is given by Aλ₁* / Aλ₂ where Aλ₁* is a predicted value for lambda 1 and Aλ₂ is a measured value with λ₂.

One way to predict an absorption constant is using an equation$\text{X(2n)* = X(2n-1) + X1(2n-1)/2 + X2(2n-1)/2}$ where X(2n)* is a predicted value of absorption constant for wavelength λ₁ when absorption constant is measured by wavelength λ₂ and$\text{X1(m) = X(m) - X(m-2)}$$\text{X2(m) = X1(m) - X1(m-2).}$

When absorption constant is measured by wavelength λ₁ absorption constant for λ₂ is predicted in the same manner.

Referring now to Fig.3, a heavy hydrogen lamp can be used as light source 2. Spectroscope 4 scans light having a desired wave length generated by a diffraction grating driven by a motor and leads the light to cell 6. A sample being isolated by a column of high-speed liquid chromatography flows into cell 6 and the light passing through cell 6 is detected by sensor 8. An output of sensor 8 varies according to absorption constant of the sample in cell 6. A CPU 20 receives the output from sensor 8 and processes it. CPU 20 also controls spectroscope 4 by changing scanning wavelength between λ₁ and λ₂ alternately with a certain constant interval. Spectroscope controller 10, absorption constant calculation unit 12, absorption constant calculation unit 14, and chromatograph ratio calculation unit 16 are integrated into CPU 20.

## Claims

1. An absorbance detector comprising
- a light source (2),
- a spectroscope (4) for splitting the light from the light source (2) into two components having different wavelengths (λ₁, λ₂) and for directing said components to a sample cell (6),
- a sensor (8) for detecting the light coming through said cell (6),
- a spectroscope controller (10) for controlling said spectroscope (4) such that said light components (λ₁, λ₂) are alternately directed to said cell (6),
- a first absorption constant calculation unit (12) for receiving the output value from said sensor (8) at one wavelength (λ₁) and for calculating the absorption constant by comparing said output value with a reference value as well as for predicting the absorption constant for a future time by extrapolation on the basis of several previously calculated absorption constant values,
- a second absorption constant calculation unit (14) for receiving the output value from said sensor (8) at the second wavelength (λ₂) and for calculating the absorption constant by comparing said output value with a reference value as well as for predicting the absorption constant for a future time by extrapolation on the basis of several previously calculated absorption constant values and
- an absorption constant ratio calculation unit (16) for receiving calculated or measured absorption constants for the same point of time from both absorption constant calculation units (12, 14) and for calculating an absorption constant ratio therebetween.

2. An absorbance detector according to claim 1 wherein the future time for which the absorption constant is predicted by one of the first and second absorption constant calculation units (12, 14) is the point of time at which the absorption constant is measured and calculated by the other absorption constant calculation unit (14, 12) respectively.

## Patentansprüche

1. Absorptionsdetektor mit
- einer Lichtquelle (2),
- einem Spektroskop (4) zum Aufteilen des Lichtes von der Lichtquelle (2) in zwei Anteile mit verschiedenen Wellenlängen (λ₁, λ₂,) und zum Richten der Anteile auf eine Probenzelle (6),
- einem Sensor (8) zum Erfassen des durch die Zelle (6) kommenden Lichtes,
- einer Spektroskopsteuerung (10) zum Steueren des Spektroskops (4) derart, daß die Lichtanteile (λ₁, λ₂,) abwechselnd auf die Zelle (6) gerichtet werden,
- einer ersten Absorptionskonstantenberechnungseinheit (12) zum Empfang des Ausgangswertes vom Sensor (8) bei einer Wellenlänge (λ₁,) und zum Berechnen der Absortionskonstanten durch vergleich des Ausgangswertes mit einem Bezugswert sowie zum Vorhersagen der Absorptionskonstanten für einen künftigen Zeitpunkt durch Extrapolation auf der Grundlage mehrerer vorher berechneter Werte der Absorptionskonstanten,
- einer zweiten Absorptionskonstantenberechnungseinheit (14) zum Empfang des Ausgangswertes vom Sensor (8) bei der zweiten Wellenlänge (λ₂) und zum Berechnen der Absorptionskonstanten durch Vergleich des Ausgangswertes mit einem Bezugswert sowie zum Vorhersagen der Absorptionskonstanten für einen künftigen Zeitpunkt durch Extrapolation auf der Grundlage mehrerer vorher berechneter Werte der Absorptionskonstanten und
- einer Absorptionskonstantenverhältnisberechnungseinheit (16) zum Empfang berechneter oder gemessener Absorptionskonstanten für den gleichen Zeitpunkt von beiden Absorptionskonstantenberechnungseinheiten (12, 14) und zum Berechnen eines Absorptionskonstantenverhältnisses dazwischen.

2. Absorptionsdetektor nach Anspruch 1, bei dem der künftige Zeitpunkt, für den die Absorptionskonstante durch eine der ersten und zweiten Absorptionskonstantenberechnungseinheiten (12, 14) vorhergesagt wird, der Zeitpunkt ist, an dem die Absorptionskonstante durch die jeweils andere Absorptionskonstantenberechnungseinheit (14, 12) gemessen und berechnet wird.

## Revendications

1. Détecteur d'absorption comprenant
- une source de lumière (2),
- un spectroscope (4) pour diviser la lumière provenant de la source de lumière (2) en deux composantes ayant des longueurs d'onde différentes (λ₁, λ₂) et pour diriger lesdites composantes sur une cellule d'échantillon (6),
- un capteur (8) pour détecter la lumière venant à travers ladite cellule (6),
- un dispositif (10) de commande de spectroscope pour commander ledit spectroscope (4) de sorte que lesdites composantes de lumière (λ₁,λ₂) soient dirigées alternativement vers ladite cellule (6),
- un premier module (12) de calcul de constante d'absorption pour recevoir la valeur de sortie dudit capteur (8) à une longueur d'onde (λ₁) et pour calculer la constante d'absorption en comparant ladite valeur de sortie avec une valeur de référence ainsi que pour prévoir la constante d'absorption pour un période future par une extrapolation basée sur plusieurs valeurs précédemment calculées de constante d'absorption,
- un deuxième module (14) de calcul de constante d'absorption pour recevoir la valeur de sortie dudit capteur (8) à la deuxième longueur d'onde (λ₂) et pour calculer la constante d'absorption en comparant ladite valeur de sortie avec une valeur de référence ainsi que pour prévoir la constant d'absorption pour une période future par une extrapolation basée sur plusieurs valeurs précédemment calculées de constante d'absorption et
- un module de calcul (16) de rapport de constantes d'absorption pour recevoir des constantes d'absorption, calculées ou mesurées pour les mêmes instants, des deux modules (12, 14) de calcul de constante d'absorption et pour calculer à partir d'elles un rapport de constantes d'absorption.

2. Détecteur d'absorption selon la revendication 1, dans lequel l'instant futur pour lequel la constante d'absorption est prévue par l'un des premier et deuxième modules (12, 14) de calcul de constante d'absorption est l'instant auquel la constante d'absorption est mesurée et calculée respectivement par l'autre module (12, 14) de calcul de constante d'absorption.
